# EUROPEAN PATENT SPECIFICATION

(11) **EP 4 550 486 B1**
(45) Date of publication and mention of the grant of the patent: **04.02.2026**
(21) Application number: 24383120.3
(22) Date of filing: 14.10.2024
(51) Int. Cl.: H01M 8/04089, H01M 8/04082, F16K 27/00, F16K 31/40

(54) **HYDROGEN INJECTION MODULE AND SUPPLY CIRCUIT PROVIDED WITH SAID MODULE**
WASSERSTOFFINJEKTIONSMODUL UND VERSORGUNGSSCHALTUNG MIT DIESEM MODUL
MODULE D'INJECTION D'HYDROGÈNE ET CIRCUIT D'ALIMENTATION ÉQUIPÉ DUDIT MODULE

(30) Priority: 31.10.2023 ES 202331933 U
(43) Date of publication of application: 07.05.2025
(73) Proprietor: Bitron Industrie Espana, S.a.u, 08930 Sant Adria de Besos (Barcelona) (ES)
(72) Inventor: GALVE BORRÁS, José, Sant Adria de Besos (ES); MENÉNDEZ TORRALBO, Adrián, 08930 Sant Adria de Besos (ES)
(74) Representative: Isern Patentes y Marcas S.L.

(56) References cited:
- CN-A- 116 190 709
- CN-U- 209 146 409
- JP-A- 2009 231 160

## Description

### Object of the invention

The present application relates to a hydrogen injection module, as well as a supply circuit for a hydrogen fuel cell for vehicles.

More specifically, the invention proposes the development of a hydrogen injection module, intended for circulating a hydrogen flow rate in a supply circuit for fuel cells configured to generate electrical energy for an electric engine of a vehicle.

### Background of the invention

Road vehicles, such as public transport vehicles, general transport vehicles, or automobiles, increasingly use alternative energy sources to provide the vehicle's engine torque in order to avoid the use of fossil fuels and, consequently, the levels of pollution caused by the same.

The use of fuel cells, for example hydrogen cells, is an example of these alternative energy sources. The fuel cell is generally supplied with pressurised hydrogen at a range of approximately 300/800 bars, which is stored in tanks located in the vehicle itself.

Thus, Hydrogen (H₂) is stored under pressure in specific tanks to be subsequently channelled towards the fuel cell through a supply circuit, where oxygen from the ambient air is added to produce electricity and, as a residual product, water (H₂O) is obtained.

The supply circuit is provided with pipes in which a filter is arranged independently along the same to prevent the passage of impurities or unwanted particles, a supply valve that is responsible for regulating the volume of hydrogen flow to be supplied to the cells or also called fuel cells, and a safety valve which actuates in case of detecting an anomaly in the operation of the supply valve. All of the aforementioned elements are mounted separately at different points in the hydrogen supply circuit, which implies the provision of an independent space for each of them and also a pressure loss value in the flow that implies providing greater supply pressure.

JP 2009-231160A and CN 209146409U describe hydrogen injection modules for fuel cells.

### Description of the invention

The present invention has been developed with the aim of providing a hydrogen injection module that is configured as a novelty within the field of application and solves the previously mentioned drawbacks, further contributing other additional advantages that will be obvious from the description below.

It is therefore an object of the present invention to provide a hydrogen injection module, intended for circulating a hydrogen flow rate in a supply circuit for fuel cells, which is characterised in that it comprises a main housing formed by a tubular body defining a longitudinal axis, said main housing being provided with an inlet and an outlet spaced apart from each other, between which and following a forward flow direction there is a particle filter member, a first safety shut-off solenoid valve and a second flow rate-regulating solenoid valve spaced apart from each other and housed in corresponding bores made in the main housing that run perpendicular to the longitudinal axis of the main housing, the first and second solenoid valves being in fluid communication with each other through a passage channel having an angle of inclination with respect to the longitudinal axis of the main housing, such that an inlet end of the passage channel, which corresponds to the flow outlet point of the first solenoid valve, is located at a level below the outlet end of the passage channel, which corresponds to the flow inlet point to the second solenoid valve.

Due to these features, it is possible to simplify the various hydraulic members that are part of a system to provide hydrogen to a fuel cell through a simple construction system. In turn, this simplifies the construction of the various components located around a supply circuit for a hydrogen fuel cell since only a single space is required to accommodate the two solenoid valves together with the filter member.

It is evident that this module reduces the number of support structures and spaces enabled inside the vehicle for the arrangement of the filter member and the two solenoid valves.

The fact that the aforementioned passage channel has this inclination allows the two solenoid valves to be arranged at the same height or level, which allows the overall volume of the module to be reduced. Therefore, the lower outlet point of the hydrogen flow circulating through both solenoid valves is located on the same plane (seen in lateral elevation view) and the second solenoid valve can receive the flow through a lateral area of the valve body without having to modify the design of the solenoid valve that can be used in a conventional hydrogen circulation circuit. In this way, costs are reduced by not requiring the manufacture of manufacturing tools other than a solenoid valve, such as that described in document no. ES 1297401.

According to the invention, the filter member may be in communication with the first safety valve via a second passage channel having an angle of inclination with respect to a longitudinal axis of the main housing, such that the inlet end of the second passage channel, which corresponds to the flow outlet point of the filter member, is located at a lower level than the outlet end of the second passage channel, which corresponds to the inlet point of the first solenoid valve. This constructive arrangement allows to reduce pressure losses and at the same time to arrange the two solenoid valves at the same level, which makes the module more compact.

Optionally, it is possible to have the inlet and outlet arranged on coaxial axes which are coaxial with the longitudinal axis of the main housing.

Preferably, the filter member consists of a cylindrical cartridge housed in a tubular region with two areas of different diameters, such that a free space is defined between at least a part of the lateral wall of the cartridge and the inner diameter of the tubular region, such that the flow inlet into the cartridge is through its lateral wall.

According to the invention, the first and second passage channels may have the same angle of inclination relative to the longitudinal axis defined by the main housing.

According to the invention, the second solenoid valve is a proportional solenoid valve, such that it comprises a sealing system such that the size of the flow passage exiting the second solenoid valve is variable in relation to the flow passage entering inside the second valve.

According to the invention, the first solenoid valve is fixed to the main housing by screw members that can be coupled in holes made in the housing and in the outer body of the first solenoid valve.

According to another feature of the invention, the second solenoid valve is fixed to the main housing by screw members that can be coupled in holes made in the main housing and in the outer body of the second solenoid valve.

Advantageously, the outer body of the first solenoid valve and the outer body of the second solenoid valve are identical to each other, the two outer bodies protruding at a height with respect to an upper wall of the main housing, so as to allow the overall volume of the module to be reduced, which implies a smaller space not only for mounting in a vehicle but also for module storage and transport tasks.

According to the invention, the first solenoid valve and the second solenoid valve may be longitudinally aligned with each other and axially aligned relative to a longitudinal central axis of the body of the main housing.

Another object of the invention is to provide a supply circuit for a hydrogen fuel cell intended to be installed in a vehicle, comprising a conduit for circulating a hydrogen flow, wherein one end of the supply circuit is connected to a hydrogen storage tank and the opposite end is connected to a fuel cell to provide electrical energy, characterised in that it includes an injection module according to any of claims 1 to 8.

Thus, the hydrogen injection module described represents an innovative structure with structural and constituent features heretofore unknown for its intended purpose, reasons which, taken together with its usefulness, provide it with sufficient grounds for obtaining the requested exclusivity privilege.

Other features and advantages of the hydrogen injection module object of the present invention will be evident in light of the description of a preferred, but not exclusive, embodiment, which is illustrated by way of non-limiting example in the drawings which are attached, in which:

### Brief description of the drawings

Figure 1 is a schematic view of a supply circuit for a hydrogen fuel cell according to the invention mounted in an electrically propelled vehicle;
Figures 2a and 2b are partially cross-sectioned perspective views of a hydrogen injection module according to the present invention;
Figure 3 is a cross-sectional elevation view of the hydrogen injection module shown in figure 2;
Figure 4 is a partial elevation view of the area where the first solenoid valve is located; and
Figure 5 is a partial elevation view of the area where the second solenoid valve is located.

### Description of a preferred embodiment

In view of the aforementioned figures, and in accordance with the adopted numbering, a preferred exemplary embodiment of the invention is disclosed, which comprises the parts and elements indicated and described in detail below.

Moreover, the terms first, second, third, and the like in the description and in the claims are used to distinguish between similar elements and not necessarily to describe a sequential or chronological order. The terms may be interchanged under appropriate circumstances and the embodiments of the invention may operate in sequences other than those described or illustrated herein.

Moreover, the terms upper, lower, up, down, and the like in the description and in the claims are used for descriptive purposes and not necessarily to describe relative positions.

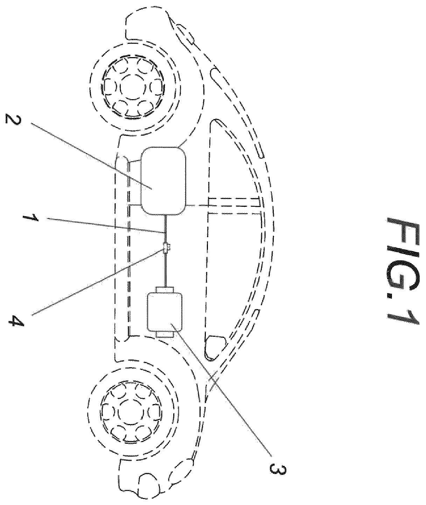

As shown in Figure 1, a supply circuit for a hydrogen fuel cell has been schematically represented, which comprises a hydraulic conduit (1) for circulating a hydrogen flow, wherein one end of the supply circuit is connected to a hydrogen storage tank (2) and the opposite end is connected to a fuel cell (3) to provide electrical energy, where an injection module is included, generally indicated with the reference (4), which is described in greater detail below.

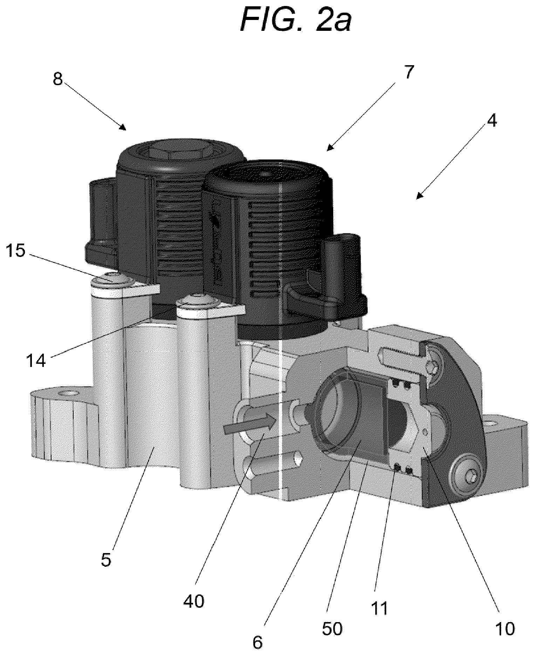

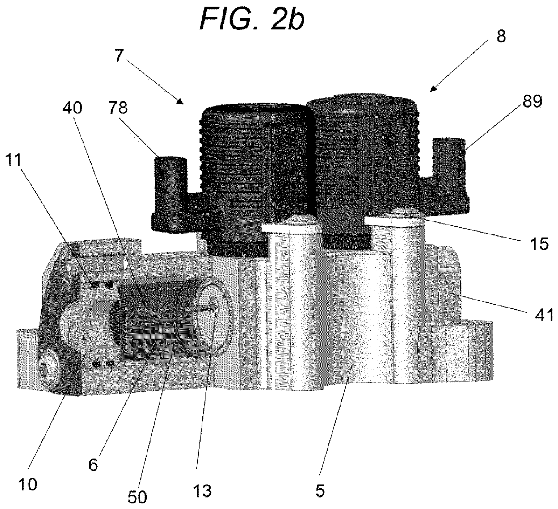

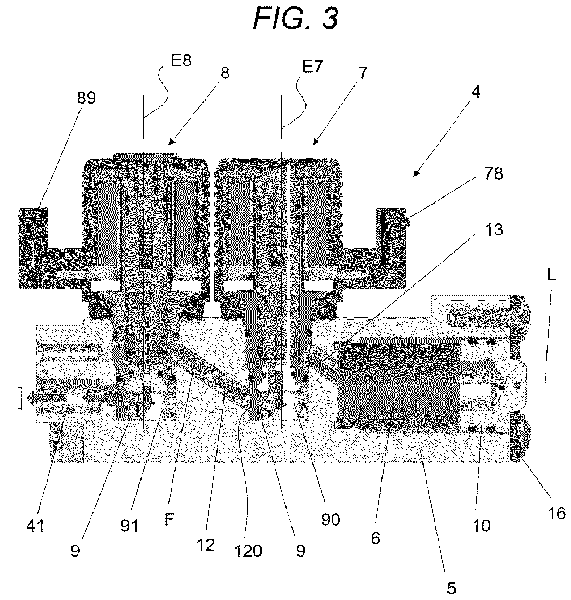

As can be seen in Figures 2a, 2b and 3, the hydrogen injection module (4) comprises a main housing (5) formed by a tubular body defining a longitudinal axis (L), which is provided in two opposite regions of the main housing (5) with an inlet (40) and an outlet (41), between which and following a flow forward direction indicated by the arrows (F), there is a particle filter member (6), a first safety shut-off solenoid valve (7) and a second regulating solenoid valve (8) intended to regulate the flow rate, which are spaced apart from each other and housed in corresponding bores (9) made in the main housing that run perpendicular to the longitudinal axis of the main housing (5). That is, the first solenoid valve (7) and the second solenoid valve (8) are positioned on corresponding axes (E7), (E8) that run parallel to each other.

To facilitate the hydrogen flow through the interior of the hydrogen injection module (4), figures 3, 4 and 5 depict the direction and sense of the hydrogen flow that follows through the interior of the module during its operation by means of arrows (F).

Furthermore, in the area where the filter member (6) is located, a plug (10) is provided, formed by a tubular body that is attached to a tubular hollow region (50) located inside the main housing (5). In addition, ring-shaped sealing gaskets (11) are provided that abut the plug (10) and the inner wall that forms the hole.

In the embodiment shown, the inlet (40) is arranged on a transverse axis with respect to the longitudinal axis (L) of the main housing (5). In an embodiment not shown, the inlet and outlet may be arranged on coaxial axes which are coaxial with the longitudinal axis (L) of the main housing (5).

Referring now to the filter member (6), it consists of a cylindrical cartridge housed in the tubular hollow region (50) with two areas having different diameters, such that a free space is defined between at least a portion of the lateral wall of the cylindrical cartridge and the inner diameter of the tubular hollow region (50), such that the flow inlet into the filter member (6) is through its lateral wall. The filter member (6) remains attached in place by means of the plug (10) arrangement. It should be mentioned that the filter member (6) and the plug (10) once they are placed inside the main housing (5) during the assembly step of the hydrogen injection module (4), are protected by the arrangement of a cover (16) coupled to the main housing (5) by screw elements and which is in contact with the filter member (6).

The first and second solenoid valves (7, 8) are in communication with each other via a first passage channel (12) having an angle of inclination with respect to the longitudinal axis (L) of the main housing (5), such that an inlet end (120) of the passage channel (12), which corresponds to the flow outlet point of the first solenoid valve (7), is located at a level below the outlet end (121) of the first passage channel (12), which corresponds to the flow inlet point to the second solenoid valve (8), as can be seen in the cross-sectional elevation view.

As can be seen in figure 3, the inlet end (120) is in fluid communication with a supply chamber (90) which is defined in the corresponding bore (9) while the outlet (41) is in fluid communication with a supply chamber (91) located at the lower portion of the second solenoid valve (8).

The filter member is in communication with the first safety valve via a second passage channel (13) having an angle of inclination with respect to a longitudinal axis of the main housing such that the inlet end of the second passage channel, which corresponds to the flow outlet point of the filter member (6), is located at a lower level than the outlet end of the second passage channel (13), which corresponds to the inlet point of the first solenoid valve (7).

Preferably, the first and second passage channels (12, 13) have the same angle of inclination relative to the longitudinal axis (L) defined by the main housing (5).

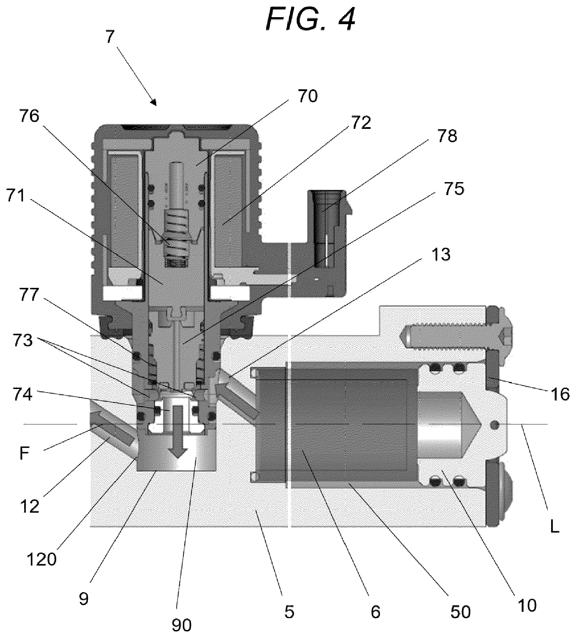

As regards the first solenoid valve (7), and as can be seen in greater detail in figure 4, it comprises a fixed core (70) and a movable core (71) axially movable through a hole in relation to said fixed core (70) by the action of a force of a magnetic field generated by a coil (72). Primary elastic return means (76) are provided that are linked to the movable core and secondary elastic means (77) linked to sealing means provided to allow the passage of flow through inlet (73) and outlet (74) ports, in which the sealing means are located in a slide that moves by the action of the movement of the movable core, the slide (75) and the movable core (71) being axially aligned with each other. The slide (75) is formed by a substantially cylindrical body defined by a first portion facing the mobile core and a second portion oriented towards the inlet and outlet ports of the fluid to be circulated, in which the first portion comprises a series of annular recesses and a cavity at the end facing the mobile core (71) where a sealing member coupled to the mobile core (71) can be inserted. The second portion comprises a lowered cross section having a substantially cylindrical shape in which the secondary elastic means (77) are inserted, the first portion having a greater external diameter than the second portion. The slide (75) has at the free end of the second portion a termination with a substantially flat surface which houses a sealing gasket intended to seal the outlet (see figure 4). Thus, the fluid inlet to the first solenoid valve (7) is carried out laterally and the fluid outlet through the lower part thereof and in a flow outlet direction that is transverse with respect to the flow inlet direction.

The operation of this first solenoid valve will not be discussed in greater detail as it is the same as that which is described in document no. ES 1298066.

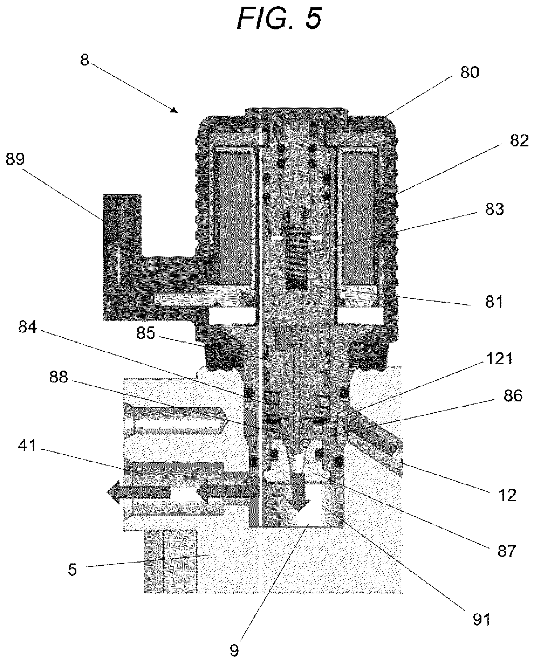

As regards the second solenoid valve (8), it comprises a fixed core (80) and a movable core (81) axially movable through a hole relative to said fixed core by the action of a force of a magnetic field generated by a coil (82), in which primary elastic return means (83) are provided that are linked to the movable core (81) and secondary elastic means (84) linked to sealing means provided to allow the passage of flow through inlet and outlet ports, in which the sealing means are located on a slide (85) that moves by the action of the movement of the movable core. The slide (85) is made up of a substantially cylindrical body defined by a first portion facing the mobile core and a second portion oriented towards the inlet (86) and outlet (87) ports of the hydrogen flow to be circulated. The first portion comprises a series of annular recesses and a cavity at the end facing the mobile core where a sealing member coupled to the mobile core (81) can be inserted. The second portion comprises a lowered cross section having a substantially cylindrical shape in which the secondary elastic means (84) are inserted, the first portion having a greater external diameter than the second portion. The slide (85) has at the free end of the second portion a termination formed by a frustoconical section (88) from which a cylindrical extension extends, intended to close the outlet. (see in detail in figure 5). Thus, the fluid inlet to the solenoid valve is carried out laterally and the fluid outlet through the lower portion of the valve.

Thus, the second solenoid valve (8) is a proportional solenoid valve, such that it comprises a sealing system such that the size of the flow passage exiting the second solenoid valve is variable in relation to the flow passage entering inside the second solenoid valve (8).

The operation of this second solenoid valve will not be discussed in greater detail as it is the same as that which is described in document no. ES 1297401.

The first and second solenoid valves (7, 8) are managed by a computer programme located in a control unit, such that they operate in a coordinated manner with each other. Both the first and second solenoid valves (7, 8) have corresponding connection sockets (78), (89) respectively, for connecting the same to the control unit. In this way, the programme executes instructions that follow the following premises:
- During a hydrogen flow supply condition, the first and second solenoid valves (7, 8) have their corresponding sealing means open, i.e. they allow fluid communication between the inlet (40) and the outlet (41) of the main housing (5);
- In the situation of closing the second solenoid valve, the first solenoid valve is also closed, i.e., the sealing means will not allow fluid communication between the two solenoid valves.

The attachment of the first solenoid valve (7) to the main housing is carried out by means of screw members (14) that can be coupled to holes made in the main housing (5) and to the outer body of the first solenoid valve (7), as shown in figure 2.

Like the first solenoid valve (7), the second solenoid valve (8) is attached to the main housing (5) by means of screw members (15) that can be coupled to holes made in the main housing (5) and to the outer body of the second solenoid valve (8).

It should be noted that the outer body of the first solenoid valve (7) and the outer body of the second solenoid valve (8) are equal to each other, the two outer bodies protruding at a height with respect to an upper wall of the main housing (5).

The details, shapes, dimensions and other accessory elements, used to manufacture the hydrogen injection module of the invention, may be suitably substituted for others which do not depart from the scope defined by the claims which are included below.

## Claims

1. A hydrogen injection module (4), intended for circulating a hydrogen flow rate in a supply circuit for fuel cells, **characterised in that** it comprises a main housing (5) formed by a tubular body defining a longitudinal axis (L), said main housing (5) being provided with an inlet (40) and an outlet (41), between which and following a forward flow direction there is a particle filter member (6), a first safety shut-off solenoid valve (7) and a second flow rate-regulating solenoid valve (8) spaced apart from each other and housed in corresponding bores made in the main housing (5) that run perpendicular to the longitudinal axis of the main housing (5), the first and second solenoid valves being in fluid communication with each other through a first passage channel (12) having an angle of inclination with respect to the longitudinal axis (L) of the main housing (5), such that an inlet end of the first passage channel (12), which corresponds to the flow outlet point of the first solenoid valve (7), is located at a level below the outlet end of the first passage channel (12), which corresponds to the flow inlet point to the second solenoid valve (8).

2. The hydrogen injection module (4) according to claim 1, **characterised in that** the filter member (6) is in fluid communication with the first safety valve via a second passage channel having an angle of inclination with respect to a longitudinal axis (L) of the main housing (5), such that the inlet end of the second passage channel, which corresponds to the flow outlet point of the filter member (6), is located at a lower level than the outlet end of the second passage channel (13), which corresponds to the inlet in the first solenoid valve (7).

3. The hydrogen injection module (4) according to any of the preceding claims, **characterised in that** the particle filter member (6) consists of a cylindrical cartridge housed in a tubular region (50) with two areas having different diameters, such that a free space is defined between at least a portion of the lateral wall of the cylindrical cartridge and the inner diameter of the tubular region, such that the flow inlet into the cartridge is through its lateral wall.

4. The hydrogen injection module (4) according to claims 1 and 2, **characterised in that** the first (12) and the second passage channel (13) have the same angle of inclination in relation to the longitudinal axis defined by the main housing (5).

5. The hydrogen injection module (4) according to claim 1, **characterised in that** the second solenoid valve (8) is a proportional solenoid valve, such that it comprises a sealing system such that the size of the flow passage exiting the second solenoid valve (8) is variable in relation to the flow passage entering inside the second solenoid valve (8).

6. The hydrogen injection module (4) according to claim 1, **characterised in that** the first solenoid valve (7) is attached to the main housing by means of screw members (14) that are coupled to holes made in the main housing (5) and to the outer body of the first solenoid valve (7).

7. The hydrogen injection module (4) according to claim 1, **characterised in that** the second solenoid valve (8) is attached to the main housing (5) by means of screw members (15) that are coupled to holes made in the main housing (5) and to the outer body of the second solenoid valve.

8. The hydrogen injection module (4) according to any of the preceding claims, **characterised in that** the outer body of the first solenoid valve (7) and the outer body of the second solenoid valve (8) are equal to each other, the two outer bodies protruding at a height with respect to an upper wall of the main housing (5).

9. The hydrogen injection module (4) according to any of the preceding claims, **characterised in that** the first solenoid valve and the second solenoid valve are longitudinally aligned with each other and axially aligned relative to a longitudinal central axis of the body of the main housing (5).

10. The hydrogen injection module (4) according to any of the preceding claims, **characterised in that** the inlet and the outlet are arranged on coaxial axes which are coaxial with the longitudinal axis (L) of the main housing (5).

11. The hydrogen injection module (4) according to any of the preceding claims, **characterised in that** the first solenoid valve (7) and the second solenoid valve (8) are positioned on corresponding axes (E7), (E8) that run parallel to each other.

12. A supply circuit for a hydrogen fuel cell in vehicles, comprising a line (1) for circulating a hydrogen flow, wherein one end of the supply circuit is connected to a storage tank (2) intended to store a volume of hydrogen and the opposite end is connected to a fuel cell (3) intended to provide electrical energy, **characterised in that** at a point along the line an injection module (4) according to any of claims 1 to 10 is provided.

## Patentansprüche

1. Wasserstoffinjektionsmodul (4), das dazu bestimmt ist, einen Wasserstoffdurchfluss in einem Versorgungskreislauf für Brennstoffzellen umzuwälzen, **dadurch gekennzeichnet, dass** es ein Hauptgehäuse (5) umfasst, das von einem rohrförmigen Körper gebildet wird, der eine Längsachse (L) definiert, wobei das Hauptgehäuse (5) mit einem Eingang (40) und einem Ausgang (41) versehen ist, zwischen denen in Vorwärtsströmungsrichtung ein Partikelfilterelement (6), ein erstes Sicherheitsabsperr-Magnetventil (7) und ein zweites durchflussregulierendes Magnetventil (8) angeordnet sind, die voneinander beabstandet und in entsprechenden Bohrungen aufgenommen sind, die im Gehäuse (5) gefertigt sind und senkrecht zur Längsachse des Hauptgehäuses (5) verlaufen, wobei das erste und das zweite Magnetventil über einen ersten Durchgangskanal (12) mit einem Neigungswinkel in Bezug auf die Längsachse (L) des Hauptgehäuses (5) miteinander in Fluidverbindung stehen, sodass sich ein Eingangsende des ersten Durchgangskanals (12), das dem Strömungsausgangspunkt des ersten Magnetventils (7) entspricht, auf einem Niveau unterhalb des Ausgangsendes des ersten Durchgangskanals (12) befindet, das dem Strömungseingangspunkt zum zweiten Magnetventil (8) entspricht.

2. Wasserstoffinjektionsmodul (4) nach Anspruch 1, **dadurch gekennzeichnet, dass** das Filterelement (6) über einen zweiten Durchgangskanal mit einem Neigungswinkel in Bezug auf eine Längsachse (L) des Hauptgehäuses (5) in Fluidverbindung mit dem ersten Sicherheitsventil steht, sodass sich das Eingangsende des zweiten Durchgangskanals, das dem Strömungsausgangspunkt des Filterelements (6) entspricht, auf einem niedrigeren Niveau befindet als das Ausgangsende des zweiten Durchgangskanals (13), das dem Eingang im ersten Magnetventil (7) entspricht.

3. Wasserstoffinjektionsmodul (4) nach einem der vorhergehenden Ansprüche, **dadurch gekennzeichnet, dass** das Partikelfilterelement (6) aus einem zylindrischen Einsatz besteht, der in einer rohrförmigen Region (50) mit zwei Bereichen mit unterschiedlichen Durchmessern aufgenommen ist, sodass ein freier Raum zwischen mindestens einem Teil der Seitenwand des zylindrischen Einsatzes und dem Innendurchmesser der rohrförmigen Region definiert ist, sodass der Strömungseingang in den Einsatz durch dessen Seitenwand erfolgt.

4. Wasserstoffinjektionsmodul (4) nach Anspruch 1 und 2, **dadurch gekennzeichnet, dass** der erste (12) und der zweite Durchgangskanal (13) den gleichen Neigungswinkel in Bezug auf die durch das Hauptgehäuse (5) definierte Längsachse aufweisen.

5. Wasserstoffinjektionsmodul (4) nach Anspruch 1, **dadurch gekennzeichnet, dass** das zweite Magnetventil (8) ein Proportionalmagnetventil ist, sodass es ein Dichtungssystem umfasst, sodass die Größe des aus dem zweiten Magnetventil (8) ausgehenden Durchgangskanals im Verhältnis zu dem innerhalb des zweiten Magnetventils (8) eingehenden Durchgangskanal variabel ist.

6. Wasserstoffinjektionsmodul (4) nach Anspruch 1, **dadurch gekennzeichnet, dass** das erste Magnetventil (7) mittels Schraubenelementen (14), die an in dem Hauptgehäuse (5) und dem Außenkörper des ersten Magnetventils (7) gefertigten Löchern gekoppelt sind, an dem Hauptgehäuse befestigt ist.

7. Wasserstoffinjektionsmodul (4) nach Anspruch 1, **dadurch gekennzeichnet, dass** das zweite Magnetventil (8) mittels Schraubenelementen (15), die an in dem Hauptgehäuse (5) und dem Außenkörper des zweiten Magnetventils gefertigten Löchern gekoppelt sind, an dem Hauptgehäuse (5) befestigt ist.

8. Wasserstoffinjektionsmodul (4) nach einem der vorhergehenden Ansprüche, **dadurch gekennzeichnet, dass** der Außenkörper des ersten Magnetventils (7) und der Außenkörper des zweiten Magnetventils (8) einander gleich sind, wobei die beiden Außenkörper in Bezug auf eine obere Wand des Hauptgehäuses (5) in einer Höhe vorstehen.

9. Wasserstoffinjektionsmodul (4) nach einem der vorhergehenden Ansprüche, **dadurch gekennzeichnet, dass** das erste Magnetventil und das zweite Magnetventil in Längsrichtung zueinander ausgerichtet sind und relativ zu einer Längsmittelachse des Körpers des Hauptgehäuses (5) axial ausgerichtet sind.

10. Wasserstoffinjektionsmodul (4) nach einem der vorhergehenden Ansprüche, **dadurch gekennzeichnet, dass** der Eingang und der Ausgang auf koaxialen Achsen angeordnet sind, die koaxial zur Längsachse (L) des Hauptgehäuses (5) sind.

11. Wasserstoffinjektionsmodul (4) nach einem der vorhergehenden Ansprüche, **dadurch gekennzeichnet, dass** das erste Magnetventil (7) und das zweite Magnetventil (8) auf entsprechenden, parallel zueinander verlaufenden Achsen (E7), (E8) angeordnet sind.

12. Versorgungskreislauf für eine Wasserstoff-Brennstoffzelle in Fahrzeugen, umfassend eine Leitung (1) zum Umwälzen einer Wasserstoffströmung, wobei ein Ende des Versorgungskreislaufs mit einem Speichertank (2) verbunden ist, der dazu bestimmt ist, ein Wasserstoffvolumen zu speichern, und das gegenüberliegende Ende mit einer Brennstoffzelle (3) verbunden ist, die dazu bestimmt ist, elektrische Energie bereitzustellen, **dadurch gekennzeichnet, dass** an einem Punkt entlang der Leitung ein Injektionsmodul (4) nach einem der Ansprüche 1 bis 10 vorgesehen ist.

## Revendications

1. Module d'injection d'hydrogène (4), destiné à faire circuler un débit d'hydrogène dans un circuit d'alimentation pour piles à combustible, **caractérisé en ce qu'**il comprend un logement principal (5) formé par un corps tubulaire définissant un axe longitudinal (L), ledit logement principal (5) étant pourvu d'une entrée (40) et d'une sortie (41), entre lesquelles et suivant une direction d'écoulement vers l'avant se trouve un élément de filtre à particules (6), une première électrovanne de coupure de sécurité (7) et une seconde électrovanne de régulation de débit (8) espacées l'une de l'autre et logées dans des alésages correspondants pratiqués dans le logement principal (5) qui s'étendent perpendiculairement à l'axe longitudinal du logement principal (5), les première et seconde électrovannes étant en communication fluidique l'une avec l'autre à travers un premier canal de passage (12) ayant un angle d'inclinaison par rapport à l'axe longitudinal (L) du logement principal (5), de telle sorte qu'une extrémité d'entrée du premier canal de passage (12), qui correspond au point de sortie d'écoulement de la première électrovanne (7), est située à un niveau inférieur à l'extrémité de sortie du premier canal de passage (12), qui correspond au point d'entrée d'écoulement dans la seconde électrovanne (8).

2. Module d'injection d'hydrogène (4) selon la revendication 1, **caractérisé en ce que** l'élément de filtre (6) est en communication fluidique avec la première vanne de sécurité par l'intermédiaire d'un second canal de passage ayant un angle d'inclinaison par rapport à l'axe longitudinal (L) du logement principal (5), de telle sorte que l'extrémité d'entrée du second canal de passage, qui correspond au point de sortie d'écoulement de l'élément de filtre (6), est située à un niveau inférieur à l'extrémité de sortie du second canal de passage (13), qui correspond à l'entrée de la première électrovanne (7).

3. Module d'injection d'hydrogène (4) selon l'une quelconque des revendications précédentes, **caractérisé en ce que** l'élément de filtre à particules (6) consiste en une cartouche cylindrique logée dans une région tubulaire (50) avec deux zones ayant des diamètres différents, de telle sorte qu'un espace libre est défini entre au moins une partie de la paroi latérale de la cartouche cylindrique et le diamètre interne de la région tubulaire, de telle sorte que l'entrée d'écoulement dans la cartouche est à travers sa paroi latérale.

4. Module d'injection d'hydrogène (4) selon les revendications 1 et 2, **caractérisé en ce que** le premier (12) et le second canal de passage (13) ont le même angle d'inclinaison par rapport à l'axe longitudinal défini par le logement principal (5).

5. Module d'injection d'hydrogène (4) selon la revendication 1, **caractérisé en ce que** la seconde électrovanne (8) est une électrovanne proportionnelle, de telle sorte qu'elle comprend un système d'étanchéité de telle sorte que la taille du passage d'écoulement sortant de la seconde électrovanne (8) est variable par rapport au passage d'écoulement entrant à l'intérieur de la seconde électrovanne (8).

6. Module d'injection d'hydrogène (4) selon la revendication 1, **caractérisé en ce que** la première électrovanne (7) est fixée au logement principal au moyen d'éléments de vis (14) qui sont accouplés à des trous pratiqués dans le logement principal (5) et au corps externe de la première électrovanne (7).

7. Module d'injection d'hydrogène (4) selon la revendication 1, **caractérisé en ce que** la seconde électrovanne (8) est fixée au logement principal (5) au moyen d'éléments de vis (15) qui sont accouplés à des trous pratiqués dans le logement principal (5) et au corps externe de la seconde électrovanne.

8. Module d'injection d'hydrogène (4) selon l'une quelconque des revendications précédentes, **caractérisé en ce que** le corps externe de la première électrovanne (7) et le corps externe de la seconde électrovanne (8) sont égaux l'un à l'autre, les deux corps externes faisant saillie à une hauteur par rapport à une paroi supérieure du logement principal (5).

9. Module d'injection d'hydrogène (4) selon l'une quelconque des revendications précédentes, **caractérisé en ce que** la première électrovanne et la seconde électrovanne sont alignées longitudinalement l'une par rapport à l'autre et alignées axialement par rapport à un axe central longitudinal du corps du logement principal (5).

10. Module d'injection d'hydrogène (4) selon l'une quelconque des revendications précédentes, **caractérisé en ce que** l'entrée et la sortie sont agencées sur des axes coaxiaux qui sont coaxiaux avec l'axe longitudinal (L) du logement principal (5).

11. Module d'injection d'hydrogène (4) selon l'une quelconque des revendications précédentes, **caractérisé en ce que** la première électrovanne (7) et la seconde électrovanne (8) sont positionnées sur des axes (E7), (E8) correspondants qui s'étendent parallèlement l'un à l'autre.

12. Circuit d'alimentation pour une pile à combustible à hydrogène dans des véhicules, comprenant une conduite (1) pour faire circuler un écoulement d'hydrogène, dans lequel une extrémité du circuit d'alimentation est reliée à un réservoir de stockage (2) destiné à stocker un volume d'hydrogène et l'extrémité opposée est reliée à une pile à combustible (3) destinée à fournir de l'énergie électrique, **caractérisé en ce que**, au niveau d'un point de la conduite, un module d'injection (4) selon l'une quelconque des revendications 1 à 10 est fourni.
